# EUROPEAN PATENT SPECIFICATION

(11) **EP 3 767 356 B1**
(45) Date of publication and mention of the grant of the patent: **15.11.2023**
(21) Application number: 19383023.9
(22) Date of filing: 20.11.2019
(51) Int. Cl.: G02B 6/44, G01K 11/32, G01L 1/24, G01D 5/353

(54) **MULTISENSING OPTICAL FIBER CABLE**
MULTISENSOR-GLASFASERKABEL
CÂBLE À FIBRE OPTIQUE DE MULTIDÉTECTION

(30) Priority: 17.07.2019 EP 19382605
(43) Date of publication of application: 20.01.2021
(73) Proprietor: Prysmian S.p.A., 20126 Milano (IT)
(72) Inventor: MARTIN REGALADO, Josep Maria, 08800 Vilanova i la Geltru (ES); CASTILLO LOPEZ, Ester, 08800 Vilanova i la Geltru (ES); IGLESIAS RODRIGUEZ, Veronica, 08800 Vilanova i la Geltru (ES); GARCIA SAN EMETERIO, Marta, 08800 Vilanova i la Geltru (ES)
(74) Representative: Pietra, Giulia

(56) References cited:
- CN-U- 201 765 351
- US-A1- 2014 226 938

## Description

### BACKGROUND

The present disclosure relates to the field of multisensing optical fiber cables for distributed sensing. In particular, the present disclosure relates to a multisensing optical fiber cable suitable for underwater and submarine applications.

### STATE OF THE ART

As known, distributed sensing, such as Distributed Temperature Sensing (DTS), Distributed Strain Sensing (DSS) and Distributed Acoustic Sensing (DAS), is a technology that enables continuous, realtime measurements along the entire length of a fiber optic cable by exploiting physical phenomena occurring in optical fibers (e.g. Raman scattering, Rayleigh scattering or Brillouin scattering) to provide a distributed sensing of temperature, vibration (for acoustic sensing) or strain. A distributed sensing system generally comprises a cable containing one or more optical fibers suitable for distributed sensing, and one or more apparatus for reading, recording and/or processing the above-mentioned physical phenomena.

Distributed sensing is more and more demanded in different applications, such as the monitoring of O&G (Oil and Gas) or water pipelines or civil works (monitoring of bridges, tunnel or ground movements).

Cables containing one or more optical fibers suitable for distributed sensing can also contain optical fibers for optical communications.

As known, an optical cable typically comprises an optical core including one or more optical fibers, and one or more layers surrounding and protecting the optical core.

The optical fibers may be arranged in various ways within the optical core of a cable. In particular, one or more optical fibers (possibly grouped in different bundles) may be loosely arranged within a semirigid loose tube. Alternatively, each optical fiber may be tight buffered in a respective sleeve of buffering material. While both the loose arrangement and the tight buffered arrangement may be suitable for communication applications, depending on the environment for which the optical cable is intended (outdoor, indoor, underwater, etc.), distributed sensing requires a specific arrangement of the optical fibers. In particular, while DTS sensing requires optical fibers with a loose arrangement, for DSS and DAS sensing tight buffered optical fibers can be preferred, since this allows making them mechanically congruent with the cable structure and then provide a higher sensing accuracy.

Optical cables for distributed sensing are known.

CN 2017 65352 discloses an optical cable for measuring seawater temperature along the depth direction. The cable comprises from 2 to 4 temperature sensing fibers coated with a coated stainless steel sleeve; 2 pressure sensing fibers coated with a polyurethane layer and then an outer spring tube and a stainless steel mesh. The sensing fibers are twisted, then covered by a double stainless steel hose. The cable has an outer diameter of 10-12 mm.

The utility model CN201765351U relates to an optical cable used for measuring the temperature distribution of seawater along the depth direction, comprising a double-buckle stainless steel tube, a temperature sensing fiber grating and a pressure sensing fiber grating.

The strain sensitive cable Trisens by NBG Systems GmbH (Austria) disclosed on pages 14-15 of "The evolution of fiber optics", NBG (document retrieved on July 12, 2019 at the URL: http://nba.kubator.at/downloads/NBG Systems Folder WEB .pdf) comprises three tight buffered fibers for strain sensing enclosed by a stainless steel tube, a PA inner sheath, a steel stranding layer and a PA outer sheath. Two additional fibers for temperature sensing are loosely arranged in the steel stranding layer. The cable has an outer diameter of 8.9 mm.

### SUMMARY

The Applicant has perceived the need to provide an optical cable, in particular an optical cable for underwater and submarine applications, which can combine all possible types of distributed sensing (DTS, DSS and DAS) and optical communications capabilities with a reduced cable size and a reduced cable weight.

In order to withstand high pressures (up to 300 bar) typical of underwater and submarine environments, optical cables for underwater and submarine applications typically comprise a metal armor made of one or more layer of steel wires and an outer sheath made of hard polymer material (e.g. High Density Polyethylene, HDPE). Further, protection against water seepage is also required, which is typically achieved by providing hermetically sealed metal tubes around the optical fibers. Such complex cable structure results in cables with large outer diameter and high weight, which can be critical, especially in the context of underwater and submarine applications.

In addition, providing different types of distributed sensing (DTS, DSS and DAS) and optical communications capabilities in a same cable requires providing in the same cable optical fibers with different arrangements and operational requirements, which could increase the cable size.

The known cables for distributed sensing described above disadvantageously exhibit some drawbacks in this respect.

As to the cable of the above-mentioned CN 2017 65352, it disadvantageously exhibits a large outer diameter (10-12 mm) in comparison with the limited fiber count (4+2) contained therein. This is mainly due to the distribution of the cable within three separated steel layers (one for each tight buffered fiber and one for all the loose fibers) having similar diameters. Such diameter is tailored to allow accommodation of all the loose fibers within one steel layer, but it is clearly excessive for the tight buffered fibers. Further, if one wishes to increase the fiber count by providing e.g. further loose fibers for DTS or optical communications, the diameter of all the steel layers shall be consistently increased, thereby resulting in a substantial further increase of the outer diameter of the cable.

As to the known strain sensitive cable Trisens described above, it also disadvantageously exhibits a large outer diameter (8.9 mm) in comparison with its limited fiber count (3+2). Furthermore, the additional sensing fibers benefit from less protection than the strain sensing fibers, then they might not be adequately protected against mechanical stress (coming, e.g. from impact) typical of submarine applications. Further, their fiber count can not be arbitrarily increased, since the size of the loose tube housing them shall be compliant with that of the steel wires. In principle, it would be possible to replace other steel wires with other loose tubes for increasing the fiber count, but this would weaken the steel stranding layer and would accordingly affect the cable capability to withstand mechanical stress typical of submarine applications.

The Applicant has then faced the problem of providing an optical cable for distributed sensing, in particular suitable for underwater and submarine applications, which overcomes the aforesaid drawbacks.

In particular, the Applicant has tackled the problem of providing an optical cable for distributed sensing system, especially suitable for underwater and submarine applications, wherein all the optical fibers are adequately protected against water seepage and the high pressures (up to 300 bar) typical of underwater and submarine environments, and wherein the different arrangements (namely, loose and tight buffered) of the optical fibers fit together so as to minimize the cable size.

The above problem is solved by an optical cable for distributed sensing according to claim 1.

Using a single metal tube to collectively enclose both the loose fibers and the tight buffered fiber(s) allows protecting all the optical fibers against water seepage while keeping the cable size smaller than e.g. that of a cable wherein multiple steel tubes are used for singularly protecting the optical fibers. Further, since all the fibers are arranged in the metal tube, they may also be effectively protected against the high pressures (up to 300 bar) typical of underwater and submarine environments, e.g. by providing an armor and a thick outer sheath made of hard polymer material (e.g. HDPE) externally to the metal tube.

The arrangement of the loose tube and the tight buffered optical fiber(s) substantially parallel to the longitudinal axis of the optical cable also contributes to limit the metal tube size and, hence, the whole cable size.

Further, the different arrangements (namely, loose and tight buffered) of the optical fibers fit together in the cable so as to contribute in minimizing its size. The asymmetric arrangement of the tight buffered optical fiber(s) in the crescent-shaped space defined between metal tube and loose tube is indeed particularly compact, in particular more compact than a symmetric arrangement wherein e.g. the tight buffered fibers are symmetrically distributed around the loose tube.

Therefore, according to the invention, the present disclosure provides an optical cable for distributed sensing according to claim 1.

In the present description and claims as "crescent-shaped space" is meant a space with a transversal cross-section having a curved shape that is broad in the center and tapers to a point at each end.

By virtue of the arrangement in the cable of the present invention, the optical fibers loosely arranged in the loose tube are capable of Distributed Temperature Sensing, DTS, and of transmitting data; while the at least one tight buffered optical fiber is capable of Distributed Strain Sensing, DSS, and Distributed Acoustic Sensing, DAS.

In an embodiment, the loose tube may be made of polymer material, for example polybutylene terephthalate, PBT, or of a metal, for example stainless steel.

In an embodiment, the loose tube has a plurality of optical fibers loosely arranged therein.

In an embodiment, the metal tube of the present cable encloses non-metallic material only.

In an embodiment, the side-by-side arrangement of the loose tube and the at least one tight buffered optical fiber is asymmetric with respect to the longitudinal axis of the optical cable.

In an embodiment, the metal tube of the present cable surrounds at least three tight buffered optical fibers.

In an embodiment, the at least one tight buffered optical fiber has a buffer layer directly contacting the metal tube.

In one embodiment, an adhesive material is provided along at least a part of the metal tube inner surface to couple the at least one tight buffered optical fiber to the metal tube. For example, the adhesive material can be provided along the whole metal tube or in form of a plurality of discrete deposits.

In an embodiment, the cable of the present description comprises an armor made of one or two layers of wires. The armor wires in a layer can be made of metal, for example steel, or of a non-metallic material, for example aramid, glass fiber or carbon fiber, or both in that metal wires can alternate to non-metallic wires in the same layer.

In an embodiment, the cable of the present description comprises an outer sheath. The outer sheath surrounds and directly contacts the metal tube and/or armor, if any.

In an embodiment, the cable of the present description comprises a bedding layer surround the metal tube and in direct contact thereto.

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The present disclosure, in at least one of the aforementioned aspects, can be implemented according to one or more of the following embodiments, optionally combined together.

For the purpose of the present description and of the appended claims, the words "a" or "an" should be read to include one or at least one and the singular also includes the plural unless it is obvious that it is meant otherwise. This is done merely for convenience and to give a general sense of the disclosure.

### BRIEF DESCRIPTION OF THE FIGURES

The present disclosure will be further clarified by the following detailed description, given by way of example and not of limitation, with reference to the attached drawings wherein:
- Figure 1 schematically shows an optical cable according to a first embodiment of the present disclosure;
- Figure 2 schematically shows an optical cable according to a second embodiment of the present disclosure;
- Figure 3 schematically shows an optical cable according to a third embodiment of the present disclosure; and
- Figure 4 schematically shows an optical cable according to a fourth embodiment of the present disclosure.

Throughout the various Figures, corresponding cable elements are indicated by the same reference numeral.

### DETAILED DESCRIPTION

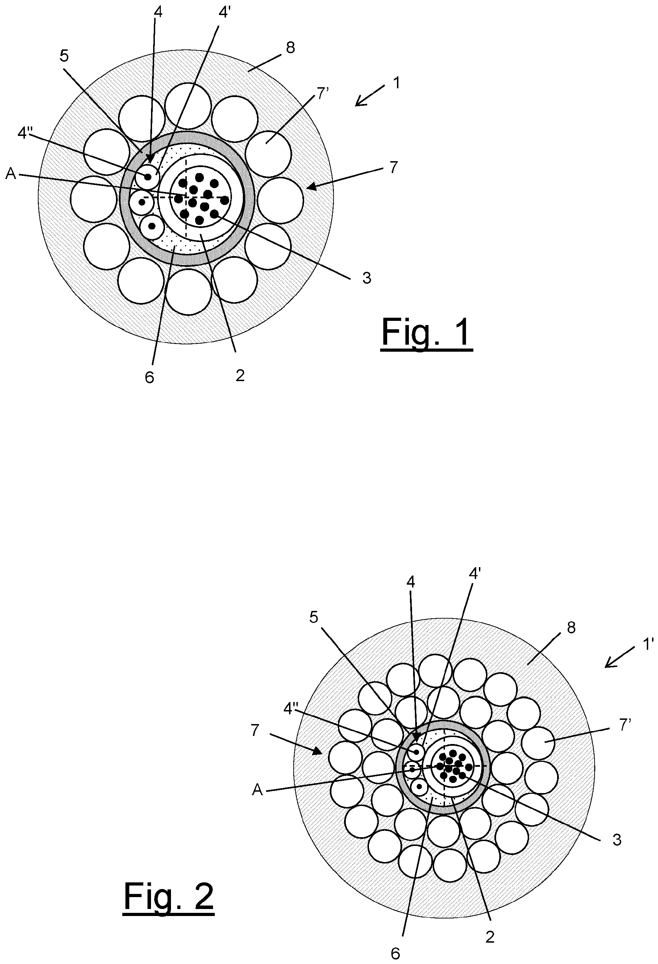

Figure 1 shows an optical cable 1 according to a first embodiment of the present disclosure. The optical cable 1 is suitable for underwater and submarine applications.

The optical cable 1, extending along a longitudinal axis A, comprises a tube 2 wherein a plurality of optical fibers 3 is loosely arranged. The tube 2 is also termed herein after "loose tube".

The loose tube 2 is made of a polymer material, for example PBT (polybutylene terephthalate). The loose tube 2 can have an outer diameter comprised between 2.0 mm and 4.0 mm, depending on the fiber count of the optical fibers 3. The loose tube 2 can have a thickness comprised between 0.3 mm and 0.5 mm.

Optionally, the loose tube 2 may also contain a lubricating gel for reducing frictions amongst the optical fibers 3.

The optical fibers 3 are preferably suitable for distributed temperature sensing and/or optical communications. For example, the optical fibers 3 may be multimode optical fibers compliant with ITU-T Recommendation G.651.1 (07/2007) or single mode optical fibers compliant with ITU-T Recommendation G.652 (11/2009) or G.657 (11/2009). The fiber count of optical fibers 3 within the tube 2 may range, for example, from 12 to 24.

The optical cable 1 also comprises at least one tight buffered optical fiber 4. For example, as shown in Figure 1 the optical cable 1 may comprise three tight buffered optical fibers 4.

The tight buffered optical fiber 4 can be suitable for strain sensing and/or acoustic sensing. For example, the optical fibers 4 may be multimode optical fibers compliant with ITU-T Recommendation G. 651.1 (07/2007) or single mode optical fibers compliant with ITU-T Recommendation G.652 or G.657 (11/2009).

Each tight buffered optical fiber 4 comprises a core, a cladding, at least one polymeric coating, for example an acrylate coating (core cladding and polymeric coating being collectively illustrated as 4"), and a buffer layer 4' of polymer material (for example, polyamide or a polyethylene copolymer, optionally charged with a zero halogen flame retardant filler) in intimate contact with the surface of the polymeric coating of the fiber. The outer diameter of the buffered optical fiber 4 (comprehensive of its buffer layer 4') can be comprised between 600 micrometres and 900 micrometres.

The optical cable 1 also comprises a metal tube 5. The metal tube 5 can be a hermetically sealed tube. The metal tube 5 can be made of stainless steel, for example SAE 304, 316, 316L grade or any other type of stainless steel. Alternatively, copper may be used.

The inner diameter of the metal tube 5 is larger than the outer diameter of the loose tube 2. The outer diameter of the metal tube 5 can be comprised between 3.0 mm and 5.0 mm, for example between 3.5 and 4.8 mm, depending on the diameter of the loose tube 2 and on the fiber count and size of the tight buffered optical fibers 4. The thickness of the metal tube 5 can be comprised between 0.1 mm and 0.5 mm, for example 0.2 mm.

The loose tube 2 with the optical fibers 3 arranged therein and the tight buffered optical fibers 4 are arranged side-by-side within the metal tube 5.

The side-by-side arrangement is asymmetric with respect to the longitudinal axis A of the optical cable in that, in a transversal cross-section view, all the tight buffered optical fibers are grouped on the same side of a longitudinal plane containing the longitudinal axis A. The loose tube 2 is arranged within the metal tube 5 so that the outer wall of the loose tube 2 and the inner wall of the metal tube 5 are substantially internally tangent. This way, the outer wall of the loose tube 2 and the inner wall of the metal tube 5 define a crescent-shaped space 6 within the metal tube 5.

According to the invention, as illustrated in Figure 1, the tight buffered optical fibers 4 are compactly arranged within the crescent-shaped space 6 with no degree of freedom. This asymmetric arrangement makes the tight buffered optical fibers firmly held between the outer wall of the loose tube 2 and the inner wall of the metal tube 5, and in direct contact thereto.

In one embodiment, an adhesive material can be provided all along the inner surface of the metal tube 5 or in form of a plurality of discrete deposits (e.g. intermittent beads) to couple the tight buffered optical fibers 4 to the metal tube 5. In this case, the direct contact between the tight buffered optical fibers 4 and the metal tube 5 is continuously or intermittently interrupted by the presence of the adhesive material deposit.

Suitable adhesive materials are curable silicone-based adhesive. For example, a suitable adhesive material has a viscosity lower than 1,000 mPa·s and/or a curing time of less than 10 hours at room temperature.

Relatively small amounts of adhesive may be sufficient to adequately couple the tight buffered optical fibers 4 to the metal tube 5. Accordingly, adjacent discrete deposits of adhesive material may be positioned about 1 meter to 50 meters apart, for example between about 1 meter and 10 meters apart or between about 1 meter and 5 meters apart.

If less than three tight buffered optical fibers 4 are needed in the optical cable 1, one or two of the three optical fibers 4 may be replaced by corresponding dummy rods having the same outer diameter as that of the buffering coating 4'. This way, the tight arrangement of the optical fibers 4 in the crescent-shaped space 6 is preserved. If instead more than three tight buffered optical fibers 4 are needed in the optical cable 1, their fiber count may be increased. In this case, the size of the metal tube 5 can be increased or the outer diameter of each tight buffered optical fibers 4 can be decreased by lessening the thickness of the buffer layer 4', to allow a compact arrangement of all the tight buffered optical fibers 4 in the crescent-shaped space 6.

The compact arrangement of the tight buffered optical fibers within the metal tube enables their performance as DSS and DAS.

The voids within the metal tube 5 can be filled with a hydrogen absorbing/water-blocking filling compound, such as an optionally thixotropic gel.

According to the invention, the loose tube 2 with the loose optical fibers 3 arranged therein and the tight buffered optical fibers 4 are laid within the metal tube 5 substantially parallel to the longitudinal axis A of the optical cable 1.

In the embodiment of Figure 1, an armor 7 is provided around the metal tube 5. The armor 7 comprises a plurality of wires 7' helically wound on the outer surface of the metal tube 5.

The wires 7' of the armor 7 can be galvanized steel wires. Alternatively, other types of wires may be used, for example steel phosphate wires, stainless steel wires or aluminum clad steel wires. In a further embodiment, the wires 7' can be made of aramid fibers, GRP (glass reinforced plastic) or glass yarns. An armor 7 made of metallic and non-metallic wires 7' can be also envisaged.

Each wire may have a diameter comprised between 0.5 mm and 4.0 mm. The wires may have a low tensile strength (≤ 45 kg/mm²), a medium tensile strength (≤ 100 kg/mm²) or a high tensile strength (≤ 200 kg/mm²).

The wires 7' of the armor 7 may be wound in close helix on the outer surface of the metal tube 5.

In the optical cable 1 according to the first embodiment depicted in Figure 1, the wires 7' of the armor 7 are arranged in a single circumferential layer substantially concentric with the metal tube 5. In the optical cable 1' according to the second embodiment depicted in Figure 2, instead, the wires 7' of the armor 7 are arranged in two circumferential layers substantially concentric with the metal tube 5.

Depending on the number of layers and on the diameter of the wires, the outer diameter of the armor 7 may be comprised between 6 mm and 21 mm.

In a non-claimed embodiment, a bituminous compound or a jelly fills the interstices between metal tube and armor and between adjacent wires of the armor. This provides protection to the wires and also avoids corrosion during the lifetime of the optical cable.

In the embodiment of Figure 1, the optical cable 1 comprises an outer sheath 8. The outer sheath 8 can be made of a polymeric material, for example a hard polymeric material such as HDPE. Alternatively, the outer sheath 8 can be made of PA (polyamide), LDPE (Low Density Polyethylene) or LLDPE (Linear Low Density Polyethylene). The thickness of the outer sheath 8 can be comprised between 1.0 mm and 9.0 mm, for example between 1.0 mm and 5.0 mm. The outer diameter of the outer sheath 8 (and then of the whole cable 1) accordingly ranges from 8 mm to 30 mm, for example from 8 to 20 mm.

In an embodiment, not illustrated, the cable according to the present disclosure does not comprise any outer sheath, the armor, if any, or the metal tube being the outermost layer thereof.

The optical cable 1 may comprise further layers.

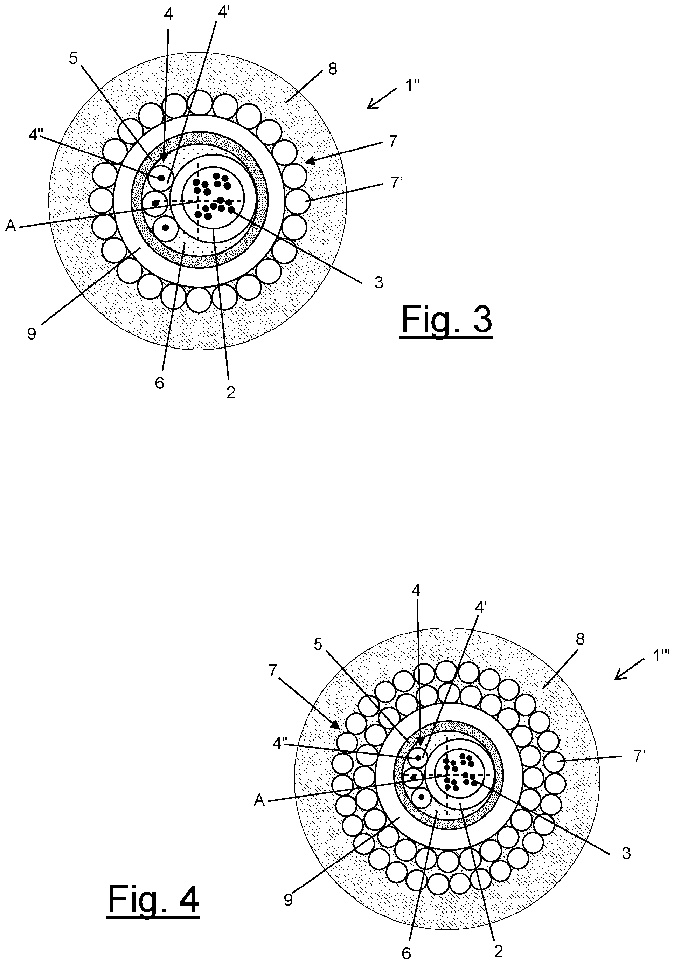

Figures 3 and 4 show an optical cable 1" according to a third embodiment of the present disclosure and an optical cable 1‴ according to a fourth embodiment of the present disclosure wherein, respectively, a bedding layer 9 is interposed between metal tube and armor.

In Figures 3 and 4, cable elements corresponding to those of the cables 1 and 1' shown in Figures 1 and 2 are indicated by the same reference numerals. The above description of such cable elements, in particular loose tube 2, loose optical fibers 3, tight buffered optical fibers 4, metal tube 5, crescent-shaped space 6, armor 7 and outer sheath 8 still applies and accordingly will not be repeated.

In the optical cables 1" and 1‴, the bedding layer 9 is made of polymeric material such as, e.g., PE (polyethylene), optionally low smoke zero halogen, or PA (polyamide). Its thickness can be comprised between 0.3 mm and 0.6 mm. Its outer diameter can be comprised between 5 mm and 12 mm. The bedding layer 9 acts as protection of the steel tube, bedding for the armor and/or for increasing armor diameter.

In the cables 1" and 1‴, the armor 7 is provided on the outer surface of the polymer layer 9. The armor 7 may comprise a single layer of wires 7' as in the third embodiment depicted in Figure 3, or two layers of wires 7' as in the fourth embodiment depicted in Figure 4. Depending on the number of layers and on the diameter of the wires (which can range from 0.5 mm and 4.0 mm, as described above), according to the third and fourth embodiment the outer diameter of the armor 7 may be comprised between 7 mm and 24 mm.

As the outer sheath 8, according to the third and fourth embodiment its thickness is preferably comprised between 1.0 mm and 9.0 mm, for example between 1.0 mm and 5.0 mm, which results in an outer diameter of the whole cable ranging from 9 mm to 30 mm.

Using a single metal tube to collectively enclose both the loose optical fibers and the tight buffered fibers allows protecting all the optical fibers against water seepage while keeping the size of the optical cable smaller than e.g. that of a cable wherein multiple steel tubes are used for individually protecting the optical fibers. Further, since all the optical fibers (tight buffered and loose tube ones) are arranged in the metal tube, they are effectively protected against the high pressures (up to 300 bar) typical of underwater and submarine environments, while the armor and/or the outer sheath provided around the metal tube provide additional protection, especially against mechanical stress or accident.

The arrangement of loose tube and tight buffered optical fibers substantially parallel to the longitudinal axis A of the optical cable also contributes to limit the size of the metal tube itself and, hence, the size of the whole optical cable.

Further, the loose arrangement of the fibers and the tight buffered arrangement of the fibers fit together so as to minimize the size of the optical cable. The asymmetric arrangement of the tight buffered optical fibers in the crescent-shaped space defined between outer wall of the loose tube and inner wall of the metal tube is more compact than a symmetric arrangement wherein, e.g., the tight buffered fibers are symmetrically distributed around the loose tube.

For example, the Applicant has estimated that if an optical cable according to the present disclosure comprises 16 optical fibers loosely arranged in a PBT loose tube and 3 tight buffered optical fibers with outer diameter of 900 micrometres, the metal tube (e.g. made of stainless steel) may have a diameter of 3.8 mm. If the optical cable also comprises an armor of galvanized wires with a diameter of 1.0/1.8 mm and is finished with an HDPE or PA outer sheath having a thickness comprised between 1.2 mm and 2.0 mm, the optical cable has an outer diameter comprised between 11 mm and 15 mm and a weight comprised between 230 kg/km and 400 kg/km.

In another example, optical cable according to the present disclosure comprises a metal tube having an outer diameter of 3.8 mm, an armor of galvanized wires with a diameter of 3.0 mm and an outer sheath having a thickness of 3.1 mm. in this case the optical cable has an outer diameter of 18 mm.

## Claims

1. An optical cable (1, 1', 1", 1‴) for distributed sensing, said optical cable (1, 1', 1", 1 "') extending along a longitudinal axis (A) and comprising:
- a loose tube (2) with at least one optical fiber (3) loosely arranged therein;
- at least one tight buffered optical fiber (4); and
- a metal tube (5) surrounding the at least one tight buffered optical fiber (4) and the loose tube (2),
wherein the loose tube (2) and the at least one tight buffered optical fiber (4) are laid within the metal tube (5) substantially parallel to the longitudinal axis (A) of the optical cable (1, 1', 1", 1‴), and
wherein the loose tube (2) is arranged within the metal tube (5) so as to define a crescent-shaped space (6) within the metal tube (5),
**characterized in that**
the at least one tight buffered optical fiber (4) is compactly arranged within said crescent-shaped space (6) with no degree of freedom, and
wherein the loose tube (2) and the at least one tight buffered optical fiber (4) are in direct contact one another and are in direct contact with an inner wall of the metal tube (5).

2. Optical cable (1, 1', 1", 1‴) according to claim 1 wherein the loose tube (2) is made of polymer material.

3. Optical cable (1, 1', 1", 1‴) according to claim 1 wherein the loose tube (2) has a plurality of optical fibers loosely arranged therein.

4. Optical cable (1, 1', 1", 1‴) according to claim 1 wherein the metal tube (5) encloses non-metallic material only.

5. Optical cable (1, 1', 1", 1‴) according to claim 1, wherein the metal tube (5) has an inner surface and an adhesive material is provided between the at least one tight buffered optical fiber (4) and the inner surface of metal tube (5).

6. Optical cable (1, 1', 1", 1 "') according to claim 5, wherein the adhesive material is provided as a plurality of discrete deposits.

7. Optical cable (1, 1', 1", 1‴) according to claim 1 wherein the arrangement of the loose tube (2) and the at least one tight buffered optical fiber (4) is asymmetric with respect to the longitudinal axis (A) of the optical cable (1, 1', 1", 1‴).

8. Optical cable (1, 1', 1", 1‴) according to claim 1 wherein the metal tube (5) surrounds at least three tight buffered optical fibers.

9. Optical cable (1, 1', 1", 1‴) according to claim 1 wherein the at least one tight buffered optical fiber (4) has a buffer layer (4') directly contacting the metal tube (5).

10. Optical cable (1, 1', 1", 1‴) according to claim 1 further comprising an armor (7) made of one or two layers of wires (7').

11. Optical cable (1, 1', 1", 1‴) according to claim 1 further comprising an outer sheath (8).

12. Optical cable (1, 1', 1", 1‴) according to claim 1 further comprising a bedding layer (9) surrounding the metal tube (5) and in direct contact thereto.

13. Optical cable (1, 1', 1", 1‴) according to claim 1 wherein the optical fibers (3) loosely arranged in the loose tube (2) are capable of Distributed Temperature Sensing, DTS, and of transmitting data.

14. Optical cable (1, 1', 1", 1‴) according to claim 1 wherein the at least one tight buffered optical fiber (4) is capable of Distributed Strain Sensing, DSS, and Distributed Acoustic Sensing, DAS.

## Patentansprüche

1. Optisches Kabel (1, 1', 1", 1‴) zur verteilten Abtastung, wobei sich das optische Kabel (1, 1', 1", 1‴) entlang einer Längsachse (A) erstreckt und Folgendes umfasst:
- ein loses Hülse (2) mit mindestens einer darin lose angeordneten optischen Faser (3);
- mindestens eine fest gepufferte optische Faser (4); und
- eine Metallhülse (5), die die mindestens eine fest gepufferte optische Faser (4) und die lose Hülse (2) umgibt, wobei die lose Hülse (2) und die mindestens eine fest gepufferte optische Faser (4) innerhalb der Metallhülse (5) im Wesentlichen parallel zur Längsachse (A) des optischen Kabels (1, 1', 1", 1") verlegt sind, und wobei die lose Hülse (2) innerhalb der Metallhülse (5) so angeordnet ist, dass sie einen sichelförmigen Raum (6) innerhalb der Metallhülse (5) definiert, **dadurch gekennzeichnet, dass** die mindestens eine dichte gepufferte optische Faser (4) kompakt innerhalb des halbmondförmigen Raums (6) ohne Freiheitsgrad angeordnet ist, und wobei die lose Hülse (2) und die mindestens eine dichte gepufferte optische Faser (4) in direktem Kontakt miteinander und in direktem Kontakt mit einer Innenwand der Metallhülse (5) sind.

2. Optisches Kabel (1, 1', 1", 1‴) nach Anspruch 1, wobei die lose Hülse (2) aus einem Polymermaterial hergestellt ist.

3. Optisches Kabel (1, 1', 1", 1‴) nach Anspruch 1, wobei die lose Hülse (2) eine Vielzahl von lose darin angeordneten optischen Fasern aufweist.

4. Optisches Kabel (1, 1', 1", 1‴) nach Anspruch 1, wobei das Metallrohr (5) nur nichtmetallisches Material umschließt.

5. Optisches Kabel (1, 1', 1", 1‴) nach Anspruch 1, wobei das Metallrohr (5) eine Innenfläche aufweist und ein Klebematerial zwischen der mindestens einen dicht gepufferten optischen Faser (4) und der Innenfläche des Metallrohrs (5) vorgesehen ist.

6. Optisches Kabel (1, 1', 1", 1‴) nach Anspruch 5, wobei das Klebematerial als eine Vielzahl von diskreten Ablagerungen vorgesehen ist.

7. Optisches Kabel (1, 1', 1", 1‴) nach Anspruch 1, wobei die Anordnung der Bündelader (2) und der mindestens einen dichten gepufferten optischen Faser (4) asymmetrisch in Bezug auf die Längsachse (A) des optischen Kabels (1, 1', 1", 1‴) ist.

8. Optisches Kabel (1, 1', 1", 1‴) nach Anspruch 1, wobei das Metallrohr (5) mindestens drei eng gepufferte optische Fasern umgibt.

9. Optisches Kabel (1, 1', 1", 1‴) nach Anspruch 1, wobei die mindestens eine dicht gepufferte optische Faser (4) eine Pufferschicht (4') aufweist, die das Metallrohr (5) direkt berührt.

10. Optisches Kabel (1, 1', 1", 1‴) nach Anspruch 1, das ferner eine Armierung (7) aus einer oder zwei Schichten von Drähten (7') aufweist.

11. Optisches Kabel (1, 1', 1", 1‴) nach Anspruch 1, das ferner einen Außenmantel (8) umfasst.

12. Optisches Kabel (1, 1', 1", 1‴) nach Anspruch 1, das ferner eine Bettungsschicht (9) umfasst, die das Metallrohr (5) umgibt und in direktem Kontakt mit diesem steht.

13. Optisches Kabel (1, 1', 1", 1‴) nach Anspruch 1, wobei die in der losen Hülse (2) lose angeordneten optischen Fasern (3) zur verteilten Temperaturmessung (Distributed Temperature Sensing, DTS) und zur Datenübertragung geeignet sind.

14. Optisches Kabel (1, 1', 1", 1‴) nach Anspruch 1, wobei die mindestens eine dicht gepufferte optische Faser (4) zur verteilten Dehnungsmessung (Distributed Strain Sensing, DSS) und zur verteilten akustischen Messung (Distributed Acoustic Sensing, DAS) geeignet ist.

## Revendications

1. Câble à fibres optiques (1, 1', 1", 1‴) pour la détection distribuée, ledit câble à fibres optiques (1, 1', 1", 1‴) s'étendant le long d'un axe longitudinal (A) et comprenant :
- un tube lâche (2) avec au moins une fibre optique (3) agencée de manière lâche dans celui-ci ;
- au moins une fibre optique à structure serrée (4) ; et
- un tube métallique (5) entourant l'au moins une fibre optique à structure serrée (4) et le tube lâche (2),
dans lequel le tube lâche (2) et l'au moins une fibre optique à structure serrée (4) sont posés à l'intérieur du tube métallique (5) sensiblement parallèlement à l'axe longitudinal (A) du câble à fibres optiques (1, 1', 1", 1‴), et
dans lequel le tube lâche (2) est agencé à l'intérieur du tube métallique (5) de sorte à définir un espace en forme de croissant (6) à l'intérieur du tube métallique (5),
**caractérisé en ce que**
l'au moins une fibre optique à structure serrée (4) est agencée de manière compacte à l'intérieur dudit espace en forme de croissant (6) sans degré de liberté, et
dans lequel le tube lâche (2) et l'au moins une fibre optique à structure serrée (4) sont en contact direct l'un avec l'autre et sont en contact direct avec une paroi intérieure du tube métallique (5).

2. Câble à fibres optiques (1, 1', 1'', 1''') selon la revendication 1 dans lequel le tube lâche (2) est réalisé en matériau polymère.

3. Câble à fibres optiques (1, 1', 1'', 1''') selon la revendication 1 dans lequel le tube lâche (2) présente une pluralité de fibres optiques agencées de manière lâche dans celui-ci.

4. Câble à fibres optiques (1, 1', 1'', 1''') selon la revendication 1 dans lequel le tube métallique (5) renferme seulement un matériau non métallique.

5. Câble à fibres optiques (1, 1', 1'', 1''') selon la revendication 1, dans lequel le tube métallique (5) présente une surface intérieure et un matériau adhésif est prévu entre l'au moins une fibre optique à structure serrée (4) et la surface intérieure du tube métallique (5).

6. Câble à fibres optiques (1, 1', 1'', 1''') selon la revendication 5, dans lequel le matériau adhésif est prévu comme une pluralité de dépôts discrets.

7. Câble à fibres optiques (1, 1', 1'', 1''') selon la revendication 1 dans lequel l'agencement du tube lâche (2) et de l'au moins une fibre optique à structure serrée (4) est asymétrique par rapport à l'axe longitudinal (A) du câble à fibres optiques (1, 1', 1", 1‴).

8. Câble à fibres optiques (1, 1', 1", 1‴) selon la revendication 1 dans lequel le tube métallique (5) entoure au moins trois fibres optiques à structure serrée.

9. Câble à fibres optiques (1, 1', 1", 1‴) selon la revendication 1 dans lequel l'au moins une fibre optique à structure serrée (4) présente une couche tampon (4') en contact direct avec le tube métallique (5).

10. Câble à fibres optiques (1, 1', 1", 1‴) selon la revendication 1 comprenant en outre une armature (7) réalisée en une ou deux couches de fils métalliques (7').

11. Câble à fibres optiques (1, 1', 1", 1‴) selon la revendication 1 comprenant en outre une gaine extérieure (8).

12. Câble à fibres optiques (1, 1', 1", 1‴) selon la revendication 1 comprenant en outre une couche d'amortissement (9) entourant le tube métallique (5) et en contact direct avec celui-ci.

13. Câble à fibres optiques (1, 1', 1", 1‴) selon la revendication 1 dans lequel les fibres optiques (3) agencées de manière lâche dans le tube lâche (2) sont aptes à la détection de température distribuée, DTS, et à la transmission de données.

14. Câble à fibres optiques (1, 1', 1", 1‴) selon la revendication 1 dans lequel l'au moins une fibre optique à structure serrée (4) est apte à la détection d'effort distribuée, DSS, et à la détection acoustique distribuée, DAS.
